## Europäisches Patentamt

## European Patent Office

## Office européen des brevets

(11) Veröffentlichungsnummer: **0 246 359**
**B1**

(12) **EUROPÄISCHE PATENTSCHRIFT**

(45) Veröffentlichungstag der Patentschrift: **09.05.90**

(51) Int. Cl.⁵: **F 16 K 11/074,** F 01 P 7/14

(21) Anmeldenummer: **86117208.8**

(22) Anmeldetag: **10.12.86**

(54) **Thermostatventil für das Kühlmittel von Brennkraftmaschinen.**

(30) Priorität: **23.05.86 DE 3617295**

(43) Veröffentlichungstag der Anmeldung:
**25.11.87 Patentblatt 87/48**

(45) Bekanntmachung des Hinweises auf die
Patenterteilung:
**09.05.90 Patentblatt 90/19**

(84) Benannte Vertragsstaaten:
**DE ES FR GB IT SE**

(56) Entgegenhaltungen:
**DE-A-2 033 307**
**DE-A-2 349 131**
**DE-A-2 556 097**
**FR-A- 407 729**
**FR-A-1 089 592**
**GB-A-1 316 261**
**US-A-1 711 901**
**US-A-2 675 830**
**US-A-4 272 265**

(73) Patentinhaber: **Gustav Wahler GmbH u. Co**
**Hindenburgstr. 146**
**D-7300 Esslingen (DE)**

(72) Erfinder: **Wahler, Hans, Dipl.-Ing.**
**Hölderlinweg 136**
**D-7300 Esslingen (DE)**

(74) Vertreter: **Kratzsch, Volkhard, Dipl.-Ing.**
**Mülbergerstrasse 65**
**D-7300 Esslingen (DE)**

Courier Press, Leamington Spa, England.

**Beschreibung**

Die Erfindung bezieht sich auf ein Thermostatventil für das Kühlmittel von Brennkraftmaschinen der im Oberbegriff des Anspruchs 1 definierten Art.

Es ist ein Thermostatventil dieser Art bekannt (DE-A-20 33 307), das als erste Ventilanordnung ein Plattenschieberventil enthält, welches eine Stützplatte und eine Ventilplatte aufweist. Außerdem enthält dieses Thermostatventil eine zweite, koaxial zu diesem Plattenschieberventil angeordnete Ventilanordnung in Form eines Tellerventils. Dieses Tellerventil weist einen mit einem zentralen Thermostaten verbundenen und dazu koaxialen Ventilteller auf, dem als Ventilsitz eine axial beabstandete Bodenfläche im Ventilgehäuse zugeordnet ist. Dieser gehäuseseitige Ventilsitz und der Ventilteller bilden zusammen das Tellerventil. Der Ventilteller wird vom Thermostaten axial, und dabei etwa rechtwinklig zur Tellerebene, verschoben und betätigt. Dies bedeutet somit, daß ein entsprechender Platz im Ventilgehäuse notwendig ist, damit dieser axiale Hub vollführt werden kann. Das aus der Stützplatte und der Ventilplatte gebildete Plattenschieberventil wird in recht umständlicher Weise vom Thermostaten durch Axialverschiebung des letzteren betätigt. Diese Axialverstellung des Thermostaten wird über eine Hebelanordnung, bestehend aus einem Hebel, einem Winkelhebel und einer Zwischenlasche, in eine Schwenkverstellung der Ventilplatte umgesetzt. Diese getriebliche Anordnung aus diesen einzelnen Hebeln ist aufwendig und nicht betriebssicher. Dabei ist zu berücksichtigen, daß im Kühlmittelstrom, der durch das Ventilgehäuse hindurchgeführt wird, auch einzelne Verunreinigungen enthalten sein können, die sehr schnell bei dem Hebelmechanismus zum Verklemmen dieses führen können. Dies hat dann zur Folge, daß die gesamte Thermostateinrichtung blockiert ist, was wiederum die Gefahr von Schäden bei der Brennkraftmaschine nach sich zieht. Nachteilig ist ferner, daß der Hebelmechanismus unter Einschluß der die einzelnen Hebel verbindenden Achsen in Achsrichtung des Thermostaten sowie quer dazu einen relativ großen Bauraum benötigt. Insgesamt ist bei diesem bekannten Thermostatventil somit nachteilig, daß das Ventilgehäuse eine große Baulänge erfordert, das Thermostatventil relativ viel Platz in axialer und radialer Richtung benötigt und kompliziert und störungsanfällig ist und daß dieses Thermostatventil sich nicht für einen vorzusehenden Stellantrieb eignet — es sei denn, es wird ein axial, in Richtung der Längsmittelachse, wirkender Stößelantrieb z.B. in Form eines thermostatischen Betätigungselements mit ausstoßbarem Kolben verwendet, für den jedoch als nachteilig gilt, daß dieser aufwendig, groß, relativ schwer und kostenaufwendig ist.

Der Erfindung liegt die Aufgabe zugrunde, ein Thermostatventil der im Oberbegriff des Anspruchs 1 genannten Art zu schaffen, bei dem die Baulänge des Ventilgehäuses verkürzt und dieses kompakter gestaltet werden kann und bei dem die Stellkräfte für die Ventilverschlußglieder reduziert sind und bei dem eine motorische Betätigung beider Ventilanordnungen mittels eines einfachen, kleinen, kompakten, leichten und billigen Antriebes erfolgen kann.

Die Aufgabe ist bei einem Thermostatventil der im Oberbegriff des Anspruchs 1 genannten Art erfindungsgemäß durch die Merkmale im Kennzeichnungsteil des neuen Anspruchs 1 gelöst.

Dadurch, daß auf einer gemeinsamen Verstellwelle zwei axial in Abstand plazierte Plattenschieberventile vorgesehen sind, kann das Ventilgehäuse und somit das gesamte Thermostatventil axial kleiner und kompakter gestaltet werden. Im übrigen ist die gesamte Anordnung auch wesentlich einfacher. Für die Betätigung beider Ventile bedarf es lediglich ein und derselben Drehverstellung — statt beim in bezug genommenen Stand der Technik nach DE-A-20 33 307 einer Axialverstellung für das zweite, als Tellerventil gestaltete Ventil und einer über ein kompliziertes Hebelgebilde notwendigen Umsetzung der Axialbewegung in eine Drehverstellung. Von Vorteil ist ferner, daß das erfindungsgemäße Thermostatventil einer Betätigung durch einen Stellantrieb zugänglich ist, der klein und einfach ausgebildet werden kann. Weil es zur Steuerung lediglich einer Drehverstellung bedarf, hingegen keiner Axialverschiebung und auch keiner solchen gegen die Wirkung einer Rückstellfeder, ergeben sich auch kleinere Betätigungskräfte für die zu betätigenden Plattenschieberventile. Ein Stellantrieb für diese Betätigung kann deswegen besonders klein, kompakt und leicht sowie kostengünstig gestaltet sein. Etwaige zusätzliche, aufwendige und teure getriebliche Übertragungsmittel können entfallen.

Im allgemeinen Ventilbau, jedoch nicht bei gattungsgemäßen Thermostatventilen, sind generell zwei Drehschieberventile in einer einzigen Ventilanordnung bekannt (DE-A-25 56 097). Dies läßt sich aber nicht ohne weiteres auf Thermostatventile übertragen.

Eine vorteilhafte Weiterbildung ergibt sich aus Anspruch 2. Durch die Plazierung und/oder Anzahl und/oder Umfangswinkelerstreckung der jeweiligen Durchlässe läßt sich sicherstellen, daß in der Öffnungsstellung die erforderliche Durchflußmenge pro Zeiteinheit gewährleistet wird. Ferner läßt sich dadurch der erforderliche Drehverstellwinkel vorgeben, der nötig ist, um die Ventilplatte des Plattenschieberventiles z.B. von der Öffnungsstellung zurück in die Schließstellung oder in eine Zwischenstellung zu bewegen.

Weitere vorteilhafte Ausgestaltungen gemäß der Erfindung ergeben sich aus den Ansprüchen 3 - 7, wodurch weitere Vereinfachungen erzielt sind.

Eine besonders vorteilhafte Gestaltung ergibt sich aus Anspruch 8. Die Ausbildung der einzelnen Ventilplatten und Stützplatten aus Keramikmaterial führt zu hoher Standfestigkeit und langer Lebensdauer, wobei diese Elemente praktisch wartungsfrei sind.

Eine weitere vorteilhafte Ausführungsform ergibt sich aus Anspruch 9 und Anspruch 10. Der Stellantrieb, insbesondere in Form eines elektrischen Schrittmotors, ist klein, einfach, leicht und kostengünstig. Wegen der relativ geringen erforderlichen Drehverstellkräfte für die Ventilbetätigung reicht ein derartiger Stellantrieb aus. Er erhöht damit den Aufwand für das Thermostatventil nur unwesentlich.

Eine weitere vorteilhafte Ausführungsform ergibt sich aus Anspruch 11 und 12. Durch die Öffnungsfeder ist gewährleistet, daß bei Ausfall des Stellantriebes, z.B. bei Ausfall der Speisung dieses, die Ventilplatte des ersten Plattenschieberventiles mittels der Öffnungsfeder selbsttätig in ihre Öffnungsstellung bewegt wird, in der ein Kühlmitteldurchgang von der Brennkraftmaschine hin zum Kühler möglich ist, so daß eine etwaige Überhitzung und Beschädigung der Brennkraftmaschine zuverlässig verhindert ist.

Weitere Einzelheiten und Vorteile der Erfindung ergeben sich aus der nachfolgenden Beschreibung.

Die Erfindung ist nachfolgend anhand eines in den Zeichnungen gezeigten Ausführungsbeispieles näher erläutert. Es zeigen:

Fig. 1 einen schematischen Schnitt eines Thermostatventiles für das Kühlmittel von Brennkraftmaschinen, das sich in der Öffnungsstellung befindet mit Sperrung des Durchlasses zum Bypaß,

Fig. 2 und 3 jeweils eine Draufsicht allein der Funktionsteile des jeweiligen Plattenschieberventiles in Pfeilrichtung II bzw. III in Fig. 1.

Das Thermostatventil 10 für das Kühlmittel von Brennkraftmaschinen weist ein allgemein mit 11 bezeichnetes Ventilgehäuse auf, das hier z.B. zweiteilig ist. Der eine Teil weist einen Einlaßstutzen 12 auf, der an den Zufluß von der nicht weiter gezeigten Brennkraftmaschine anschließbar ist, so daß das Kühlmittel von dort in den Einlaßstutzen 12 gelangt. Ferner weist dieser Teil einen dazu etwa rechtwinklig ausgerichteten Bypaß-Auslaßstutzen 15 auf, an den eine nicht gezeigte, zur Brennkraftmaschine im Kurzschluß zurückführende Bypaß-Leitung anschließbar ist. Der andere Teil des Ventilgehäuses 11 besteht aus einem Auslaßstutzen 13, an den der zum nicht gezeigten Kühler des Kühlkreislaufes führende Abfluß anschließbar ist. Der Auslaßstutzen 13 geht in eine zum Bypaß-Auslaßstutzen 15 koaxiale, etwa rohrförmige Kappe 14 über, die an dem dem Bypaß-Auslaßstutzen 15 abgewandten Ende des Rohrteiles 16 z.B. durch Umbördeln eines Bördelrandes 17 befestigt ist.

Der Durchfluß des Kühlmittels vom Einlaßstutzen 12 zum Bypaß-Auslaßstutzen 15 und/oder zum Auslaßstutzen 13 ist mittels einer Steuervorrichtung 18 steuerbar, die zwei zueinander koaxiale und zumindest im wesentlichen baugleiche Plattenschieberventile 20, 40 aufweist.

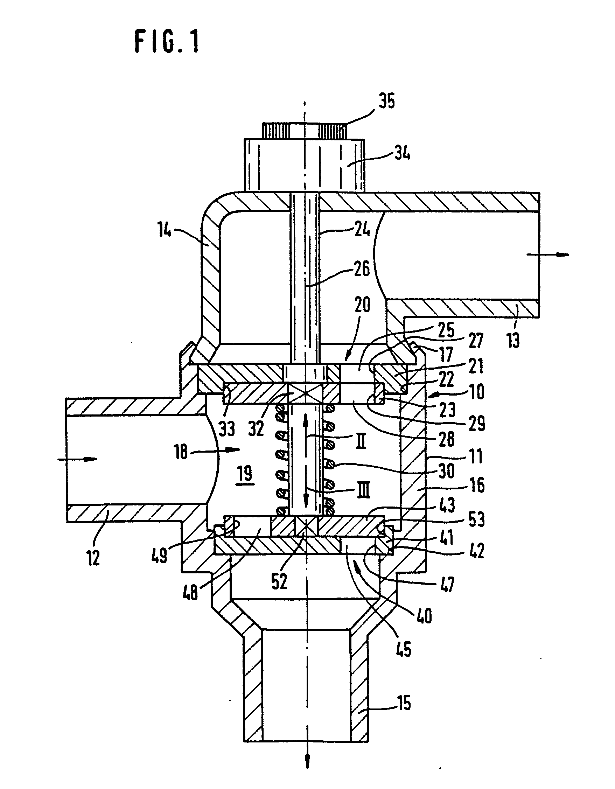

Das erste Plattenschieberventil 20 weist eine Stützplatte 21 auf, die in einem Ringsitz 22 am in Fig. 1 oberen Ende des Rohrteiles 16 und nahe dem Bördelrand 17 in vorgegebener relativer Drehstellung undrehbar im Ventilgehäuse 11 befestigt ist. Der Stützplatte 21 ist eine Ventilplatte 23 zugeordnet, die axial in Richtung des Pfeiles II in Fig. 1 gegen die zugeordnete Axialseite der Stützplatte 21 angepreßt ist und mittels einer die Ventilplatte 23 durchsetzenden Verstellwelle 24 drehverstellbar ist, mit der die Ventilplatte 23 gekuppelt ist. Die Stützplatte 21 enthält auf ihrer Fläche einen Durchlaß 25, der hier aus einem zur Drehverstellachse 26 koaxialen Bogenschlitz 27 gebildet ist. Auch die Ventilplatte 23 ist auf ihrer Fläche in gleichem radialen Abstand mit einem Durchlaß 28 in Form ebenfalls eines Bogenschlitzes 29 versehen. Die Winkelerstreckung sowie Breite der Bogenschlitze 27, 29 sind so gewählt, daß in der in Fig. 1 gezeigten Öffnungsstellung, in der beide Bogenschlitze 27, 29 unter Herstellung eines vollen Durchganges sich überdecken, ein ausreichender Durchströmquerschnitt geschaffen ist, um den erforderlichen Flüssigkeitsdurchsatz vom Einlaßstutzen 12 zum Auslaßstutzen 13 zu gewährleisten.

Bei einem anderen, nicht gezeigten Ausführungsbeispiel enthalten die Stützplatte 21 und Ventilplatte 23 weitere, in Umfangsrichtung benachbarte Bogenschlitze und/oder Bohrungen oder anders geformte Durchlässe. Die Umfangswinkelerstreckung der Bogenschlitze 27, 29 gibt zugleich vor, wie groß der Drehverstellwinkel der Verstellwelle 24 sein muß, um ausgehend von der in Fig. 1 gezeigten Öffnungsstellung statt dessen durch Drehverstellung der Ventilplatte 23 relativ zur feststehenden Stützplatte 21 eine Schließstellung zu erreichen, bei der der Bogenschlitz 27 der Stützplatte 21 gänzlich von der Ventilplatte 23 überdeckt und möglichst dicht verschlossen ist.

Entsprechend dem ersten Plattenschieberventil 20 ist auch das zweite Plattenschieberventil 40 ausgebildet. Es weist eine in einem Ringsitz 42 axial und in Umfangsrichtung fest gehaltene Stützplatte 41 mit Durchlaß 45 in Form eines Bogenschlitzes 47 und ferner eine Ventilplatte 43 auf, die axial in Pfeilrichtung III gegen die zugewandte Axialseite der Stützplatte 41 angepreßt ist. Die Ventilplatte 43 enthält ebenfalls einen Durchlaß 48 in Form eines Bogenschlitzes 49. Die Ventilplatte 43 kann völlig der Ventilplatte 23 entsprechen.

Das Plattenschieberventil 20 dient zur Steuerung des Durchlasses zwischen dem Einlaßstutzen 12 und dem Auslaßstutzen 13, während das andere Plattenschieberventil 40 zur Steuerung des Durchlasses zwischen dem Einlaßstutzen 12 und dem Bypaß-Auslaßstutzen 15 dient. Das erstgenannte Plattenschieberventil 20 sitzt innerhalb des Rohrteiles 16 oberhalb der Wandung des Einlaßstutzens 12, während das zweite Plattenschieberventil 40 unterhalb der Wandung des Einlaßstutzens 12 angeordnet ist, so daß zwischen beiden Plattenschieberventilen 20, 40 im Rohrteil 16 ein Zwischenraum 19 verbleibt.

Beide Ventilplatten 23, 43 sind auf der axialen Zuströmseite der jeweiligen Stützplatte 21 bzw. 41 angeordnet und angepreßt, die dem Einlaß vom Einlaßstutzen 12 her zugewandt und dem Auslaß zum Auslaßstutzen 13 bzw. Bypaß-Auslaßstutzen 15 abgewandt ist.

Auch die Ventilplatte 43 des zweiten Plattenschieberventils 40 ist drehverstellbar mit der Verstellwelle 24 gekuppelt. Beide Ventilplatten 23 und 43 sind über eine axiale Druckfeder 30 in Form einer z.B. zylindrischen Schraubenfeder zwischen beiden verspannt. Die Druckfeder 30 ist auf der Verstellwelle 24 gehalten und zentriert. Sie drückt beide Ventilplatten 23 und 43 axial voneinander weg und preßt diese gegen die ihr jeweils zugeordnete Stützplatte 21 bzw. 41.

Jede Ventilplatte 23 und 43 enthält eine Vieleckbohrung 31 bzw. 51, die hier z.B. aus einer Vierkantbohrung besteht. Die Vieleckbohrung 31 bzw. 51 ist von einem dementsprechend geformten Absatz 32 bzw. 52 der Verstellwelle 24 unter Belassung eines axialen Bewegungsspieles durchsetzt, wodurch eine drehmomentübertragende Kupplung durch Formschluß gegeben ist.

Jede Stützplatte 21, 41 enthält auf einer Axialseite eine kreistellerförmige Eintiefung 33 bzw. 53, die dem Scheibendurchmesser der zugeordneten Ventilplatte 23 bzw. 43 entspricht. Die zugeordnete Ventilplatte 23 bzw. 43 ist in diese Eintiefung 33 bzw. 53 eingepaßt und darin aufgenommen und in bezug auf die Drehverstellachse 26 zentriert. Zugleich ist dadurch eine verstärkte Abdichtung erreicht.

Die beiden Ventilplatten 23 und 43 sind in Drehverstellrichtung, d.h. in Richtung um die Drehverstellachse 26, derart versetzt zueinander angeordnet, daß in einer ersten, gegenüber der gezeigten Stellung verdrehten Stellung der Verstellwelle 24 mit beiden Ventilplatten 23 und 43 das zweite Plattenschieberventil 40, welches den Durchgang zum Bypaß-Auslaßstutzen 15 steuert, geöffnet ist, wobei sich die Bogenschlitze 49 und 47 überlappen, wohingegen in dieser Position das erste Plattenschieberventil 20 geschlossen ist, sich also dessen Bogenschlitze 29, 27 nicht überlappen.

Bei Drehverstellung der Verstellwelle 24 in Umfangsrichtung ist hingegen das erste Plattenschieberventil 20, welches den Durchgang zum Auslaßstutzen 13 steuert, geöffnet, hingegen das zweite Plattenschieberventil 40 geschlossen.

Eine weitere wesentliche Ausgestaltung liegt darin, daß bei beiden Plattenschieberventilen 20 und 40 sowohl die Ventilplatte 23 bzw. 43 als auch die zugeordnete Stützplatte 21 bzw. 41 jeweils aus einer Keramikscheibe gebildet ist, die eine zuverlässige Abdichtung bei hoher Lebensdauer und praktisch keinerlei Wartungsaufwand gewährleistet.

Wie Fig. 1 zeigt, ist die Verstellwelle 24 durch die Kappe 14 hindurch aus dem Ventilgehäuse 11 herausgeführt. Das Thermostatventil ist mit einem an der Verstellwelle 24 angreifenden Stellantrieb 34 versehen, der hier insbesondere aus einem elektrischen Schrittmotor besteht. Der Stellantrieb 34 greift unmittelbar an der Verstellwelle 24 an, ist koaxial zu dieser ausgerichtet und außen unmittelbar an die Kappe 14 angesetzt und daran befestigt. Irgendein zusätzliches Übertragungsgetriebe entfällt.

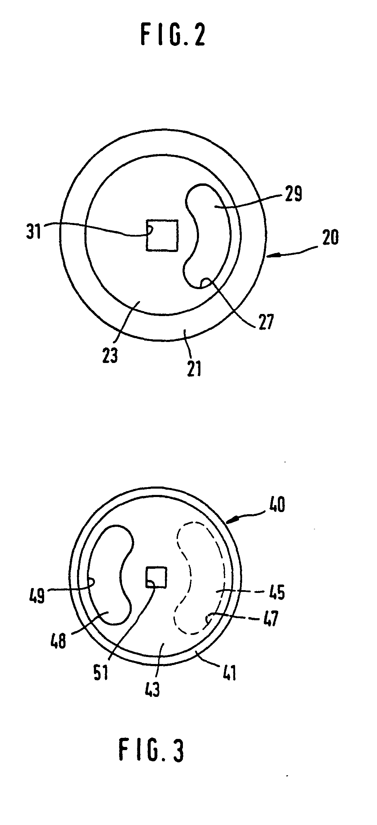

Oberhalb des Stellantriebes 34 befindet sich eine nur schematisch angedeutete Öffnungsfeder 35, die insbesondere als zur Verstellwelle 24 in etwa koaxiale Spiralfeder ausgebildet ist. Die Öffnungsfeder 35 ist mit einem Ende an der Verstellwelle 24 und mit ihrem anderen Ende z.B. am Gehäuse des Stellantriebes 34 befestigt. Die Öffnungsfeder 35 ist in der Lage, bei Ausfall des Stellantriebes 34 die Verstellwelle 24 so um die Drehverstellachse 26 zu drehen, daß das erste Plattenschieberventil 20 in die in Fig. 1 gezeigte Öffnungsstellung gelangt und das zweite Plattenschieberventil 40 in die gezeigte Schließstellung gelangt. Damit ist sichergestellt, daß bei Ausfall der Speisung für den Stellantrieb 34 die gezeigte Öffnungsstellung hergestellt ist, in der der Durchgang der Kühlflüssigkeit vom Einlaßstutzen 12 zum Auslaßstutzen 13 gewährleistet ist. Der Stellantrieb 34 arbeitet bei der Drehverstellung der Verstellwelle 24 gegen die Wirkung der Öffnungsfeder 35, wenn bei Einschaltung des Stellantriebes 34 die Verstellwelle 24 z.B. im Uhrzeigersinn bei der Betrachtung gemäß Fig. 2 soweit gedreht wird, bis das Plattenschieberventil 20 geschlossen und das andere Plattenschieberventil 40 geöffnet ist. Bei dieser Verstellung sind praktisch keine Differenzdrücke zu überwinden, so daß der Stellantrieb 34 trotz des Umstandes, daß dieser dabei gegen die Öffnungsfeder 35 arbeiten muß, relativ klein, kompakt und leicht und kostengünstig gestaltet werden kann. Der Stellantrieb 34 z.B. als elektrischer Schrittmotor macht eine feinfühlige Drehverstellung der gesamten Steuervorrichtung 18 in Abhängigkeit verschiedener Kennfeldgrößen möglich. Bei Ausfall des Stellantriebes 34 ist über die Öffnungsfeder 35 sichergestellt, daß das Thermostatventil 10 dann selbsttätig hinsichtlich des Plattenschieberventiles 20 in die gezeigte Öffnungsstellung gedreht wird, so daß für diesen Fall mit Sicherheit ein Kühlmittelverlauf vom Einlaßstutzen 12 zum Auslaßstutzen 13 und damit zum Kühler gewährleistet und eine Überhitzung der Brennkraftmaschine verhindert ist.

**Patentansprüche**

1. Thermostatventil für das Kühlmittel von Brennkraftmaschinen, mit einem Plattenschieberventil (20) in einem Ventilgehäuse (11) zwischen einem Einlaß, an den der Zufluß von der Brennkraftmaschine anschließbar ist, und einem Auslaß, an den der Abfluß zum Kühler der Brennkraftmaschine anschließbar ist, welches zumindest eine zwischen dem Einlaß und dem Auslaß gebildete Ventilöffnung beherrscht und den Kühlmitteldurchlaß durch diese Ventilöffnung steuert und dessen Ventilverschlußglied aus einer innerhalb der Ebene der Ventilöffnung drehverstellbaren, gegen eine Stützplatte (21) angepreßten Ventilplatte (23) gebildet ist, die auf ihrer Fläche zumindest einen Durchlaß (28) enthält, dem ein entsprechender, zu steuernder Durchlaß (25) in der Stützplatte (21) zugeordnet ist, und die auf der axialen Zuströmseite der Stützplatte (21) angeordnet ist, die dem Einlaß zugewandt und dem Auslaß abgewandt ist, und mit einer zweiten, koaxial zum Plattenschieberventil (20) angeordneten Ventilanordnung, die im Ventilgehäuse (11) zwischen dem Einlaß und einem Bypaß-Auslaß angeordnet ist, an den eine zur Brennkraftmaschine zurückführende Bypaßleitung anschließbar ist, dadurch gekennzeichnet, daß die zweite Ventilanordnung ebenfalls als Plattenschieberventil (40) ausgebildet ist, das koaxial zum ersten Plattenschieberventil (20) angeordnet und mit diesem baugleich ist und ebenso wie dieses eine innerhalb der Ebene der Ventilöffnung drehverstellbare, gegen eine zugeordnete Stützplatte (41) angepreßte Ventilplatte (43) aufweist, die auf ihrer Fläche zumindest einen Durchlaß (48) enthält, dem ein entsprechender und zu steuernder Durchlaß (45) in der Stützplatte (41) zugeordnet ist, daß beide Ventilplatten (23, 43) mit einer gemeinsamen Verstellwelle (24) drehverstellbar gekuppelt und in Drehverstellrichtung derart versetzt zueinander angeordnet sind, daß in einer ersten Stellung der Verstellwelle (24) mit beiden Ventilplatten (23, 43) das zweite, den Durchgang zum Bypaß steuernde Plattenschieberventil (40) geöffnet und das erste Plattenschieberventil (20) geschlossen ist und daß in einer demgegenüber in Drehverstellrichtung verdrehten Öffnungsstellung der Verstellwelle (24) das erste, den Durchgang zum Auslaß steuernde Plattenschieberventil (20) geöffnet und das zweite Plattenschieberventil (40) geschlossen ist, und daß an der Verstellwelle (24) ein Stellantrieb (34) zur Drehverstellung angreift.

2. Thermostatventil nach Anspruch 1, dadurch gekennzeichnet, daß der Durchlaß (28, 48, 25, 45) in jeder Ventilplatte (23, 43) und/oder jeder Stützplatte (21, 41) aus einem Loch, insbesondere einer Bohrung, und/oder einem zur Drehverstellachse (26) konzentrischen Bogenschlitz (29, 49 bzw. 27, 47) gebildet ist.

3. Thermostatventil nach Anspruch 1 oder 2, dadurch gekennzeichnet, daß die Ventilplatte (43) des zweiten Plattenschieberventils (40) auf der axialen Zuströmseite der zugeordneten Stützplatte (41) angeordnet ist, die der Ventilplatte (23) des ersten Plattenschieberventils (20) zugewandt ist.

4. Thermostatventil nach einem der Ansprüche 1—3, dadurch gekennzeichnet, daß die Stützplatten (21, 41) beider Plattenschieberventile (20, 40) und/oder die Ventilplatten (23, 43) beider jeweils baugleich ausgebildet sind.

5. Thermostatventil nach einem der Ansprüche 1—4, dadurch gekennzeichnet, daß zwischen beiden Ventilplatten (23, 43) eine Druckfeder (30), insbesondere eine auf der Verstellwelle (24) gehaltene axiale Druckfeder, z.B. zylindrische Schraubenfeder, angeordnet ist, die beide Ventilplatten (23, 43) voneinander weg und gegen die ihr jeweils zugeordnete Stützplatte (21 bzw. 41) preßt.

6. Thermostatventil nach einem der Ansprüche 1—5, dadurch gekennzeichnet, daß jede Ventilplatte (23, 43) eine Vieleckbohrung (31, 51), z.B. eine Vierkantbohrung, enthält, die von einem demgemäß geformten Absatz (32, 52) der Verstellwelle (24), z.B. von einem Vierkantabsatz, unter Belassung eines axialen Bewegungsspieles durchsetzt ist.

7. Thermostatventil nach einem der Ansprüche 1—6, dadurch gekennzeichnet, daß jede Stützplatte (21, 41) auf einer Axialseite eine etwa kreistellerförmige Eintiefung (33, 53) aufweist, die dem Scheibendurchmesser der zugeordneten Ventilplatte (23, 43) entspricht, und daß die zugeordnete Ventilplatte (23, 43) in der Eintiefung (33, 53) aufgenommen und zentriert geführt ist.

8. Thermostatventil nach einem der Ansprüche 1—7, dadurch gekennzeichnet, daß beim ersten Plattenschieberventil (20) und/oder zweiten Plattenschieberventil (40) dessen Ventilplatte (23, 43) und/oder Stützplatte (21, 41) aus einer Keramikscheibe gebildet ist.

9. Thermostatventil nach einem der Ansprüche 1—8, dadurch gekennzeichnet, daß der Stellantrieb (24) als elektrischer Schrittmotor ausgebildet ist.

10. Thermostatventil nach einem der Ansprüche 1—9, dadurch gekennzeichnet, daß die Verstellwelle (24) aus dem Ventilgehäuse (11) herausgeführt ist und daran unmittelbar der Stellantrieb (34) angreift, der zur Verstellwelle (24) koaxial ausgerichtet und an das Ventilgehäuse (11) angesetzt und daran befestigt ist.

11. Thermostatventil nach einem der Ansprüche 1 - 10 dadurch gekennzeichnet, daß an der Verstellwelle (24) eine Öffnungsfeder (35) angreift, die einerseits an der Verstellwelle (24) und andererseits am Gehäuse des Stellantriebes (34) oder am Ventilgehäuse (11) befestigt ist und gegen die der Stellantrieb (34) bei der Drehverstellung der Ventilplatte (23, 43) des Plattenschieberventiles (20, 40) in der einen Drehverstellrichtung arbeitet, wobei die Öffnungsfeder (35) diese Ventilplatte (23) bei Ausfall des Stellantriebes (34) selbsttätig in die den Durchgang zum Auslaßstutzen (13) freigebende Öffnungsstellung bewegt.

12. Thermostatventil nach Anspruch 11, dadurch gekennzeichnet, daß die Öffnungsfeder (35) als zur Verstellwelle (24) etwa koaxiale Spiralfeder ausgebildet ist.

**Revendications**

1. Vanne thermostatique pour le réfrigérant de moteurs à combustion interne, comprenant un robinet-vanne à sièges parallèles (20) dans une boîte à soupape (11) entre une entrée à laquelle peut être raccordée l'admission du moteur à combustion interne, et une sortie à laquelle peut être raccordée l'évacuation vers le radiateur du moteur à combustion interne, laquelle vanne thermostatique contrôle au moins une ouverture de soupape formée entre l'entrée et la sortie et commande le passage du réfrigérant par ladite ouverture de soupape, et dont l'organe de fermeture de soupape est constitué par une lame de soupape (23) pouvant être tournée dans le plan de l'ouverture de soupape et appliquée contre une plaque d'appui (21), ladite lame de soupape présentant sur sa surface au moins un passage (28) auquel est associé dans la plaque d'appui (21) un passage (25) correspondant à commander, et se situant du côté admission axial de la plaque d'appui (21) dirigé vers l'entrée et opposé à la sortie, ainsi qu'un second système de soupapes disposé coaxialement par rapport au robinet-vanne à sièges parallèles (20) lequel système est placé dans la boîte à soupape (11) entre l'entrée et une sortie de dérivation à laquelle peut être raccordée une conduite de dérivation retournant au moteur à combustion interne, caractérisée en ce que le second système de soupapes est, lui aussi, conformé en robinet-vanne à sièges parallèles (40) disposé coaxialement par rapport au premier robinet-vanne à sièges parallèles (20), avec une construction identique à celui-ci, et qu'il comprend, tout comme ce dernier, une lame de soupape (43) pouvant être tournée dans le plan de l'ouverture de soupape et appliquée contre une plaque d'appui associée (41), qui présente sur sa surface au moins un passage (48) auquel est associé un passage (45) correspondant à commander dans la plaque d'appui (41); que les deux lames de soupape (23, 43) sont couplées en rotation avec un arbre de réglage commun (24) et décalées l'une par rapport à l'autre dans le sens de rotation de réglage de telle façon que, dans une première position de l'arbre de réglage (24), les deux lames de soupape (23, 43) ouvrent le second robinet-vanne à sièges parallèles (40) commandant le passage vers la dérivation et ferment le premier robinet-vanne à sièges parallèles (20); que, dans une position d'ouverture de l'arbre de réglage (24) tournée par rapport à la première position dans le sens de rotation, le premier robinet-vanne à sièges parallèles (20) commandant le passage vers la sortie est ouvert, tandis que le second robinet-vanne à sièges parallèles (40) est fermé; et qu'un entraînement de commande (34) agit sur l'arbre de réglage (24) pour l'entraînement en rotation.

2. Vanne thermostatique selon la revendication 1, caractérisée en ce que le passage (28, 48, 25, 45) dans chaque lame de soupape (23, 43) et/ou dans chaque plaque d'appui (21, 41) est formé par un trou, en particulier un alésage, et/ou par une fente en arc (29, 49 et respectivement 27, 47) disposé concentriquement par rapport à l'axe de rotation (26).

3. Vanne thermostatique selon l'une des revendications 1 ou 2, caractérisée en ce que la lame de soupape (43) du second robinet-vanne à sièges parallèles (40) est disposée du côté admission axial de la plaque d'appui associée (41) qui est dirigé vers la lame de soupape (23) du premier robinet-vanne à sièges parallèles (20).

4. Vanne thermostatique selon l'une des revendications 1 à 3, caractérisée en ce que les plaques d'appui (21, 41) des deux robinets-vannes à sièges parallèles (20, 40) et/ou les lames de soupape (23, 43) des deux robinets-vannes sont respectivement de construction identique.

5. Vanne thermostatique selon l'une des revendications 1 à 4, caractérisée en ce qu'entre les deux lames de soupape (23, 43) est disposé un ressort de compression (30), en particulier un ressort de compression axial maintenu sur l'arbre de réglage (24), par exemple un ressort à boudin cylindrique, qui écarte les deux lames de soupape (23, 43) et les applique contre la plaque d'appui (21 et respectivement 41) respectivement associée.

6. Vanne thermostatique selon l'une des revendications 1 à 5, caractérisée en ce que chaque lame de soupape (23, 43) comprend un alésage polygonal (31, 51), par exemple un alésage carré, qui est traversé par un épaulement (32, 52) de forme adéquate de l'arbre de réglage (24), par exemple par un épaulement carré, en laissant subsister un jeu de mouvement axial.

7. Vanne thermostatique selon l'une des revendications 1 à 6, caractérisée en ce que chaque plaque d'appui (21, 41) présente sur l'une des faces axiales une dépression (33, 53) sensiblement en forme de plateau circulaire qui correspond au diamètre de disque de la lame de soupape associée (23, 43); et que la lame de soupape associée (23, 43) est logée et guidée de manière centrée dans la dépression (33, 53).

8. Vanne thermostatique selon l'une des revendications 1 à 7, caractérisée en ce que la lame de soupape (23, 43) et/ou la plaque d'appui (21, 41) du premier robinet-vanne à sièges parallèles (20) et/ou du second robinet-vanne à sièges parallèles (40) est réalisée sous la forme d'un disque en céramique.

9. Vanne thermostatique selon l'une des revendications 1 à 8, caractérisée en ce que l'entraînement de commande (34) est conformé en moteur électrique pas-à-pas.

10. Vanne thermostatique selon l'une des revendications 1 à 9, caractérisée en ce que l'arbre de réglage (24) est sorti de la boîte à soupape (11) et soumis directement à l'action de l'entraînement de commande (34) lequel est orienté coaxialement par rapport audit arbre de réglage (24), et rapporté et fixé sur la boîte à soupape (11).

11. Vanne thermostatique selon l'une des revendications 1 à 10, caractérisée en ce que l'arbre de réglage (24) est soumis à l'action d'un ressort d'ouverture (35) qui est fixé d'une part sur l'arbre de réglage (24) et d'autre part sur le boîtier de l'entraînement de commande (34) ou sur la boîte à soupape (11) et à l'action duquel s'oppose ledit entraînement de commande (34) lors du déplacement de la lame de soupape (23, 43) du robinet-vanne à sièges parallèles (20, 40) dans l'un des sens de rotation, le ressort d'ouverture (35) assurant, lors d'une défaillance de l'entraînement de commande (34), le déplacement automatique de ladite lame de soupape (23) dans la position d'ouverture libérant le passage vers la tubulure d'évacuation (13).

12. Vanne thermostatique selon la revendication 11, caractérisée en ce que le ressort d'ouverture (35) est conformé en ressort spiral sensiblement coaxial à l'arbre de réglage (24).

**Claims**

1. Thermostatic valve for the coolant of internal combustion engines, having a plate-type slide valve (20) in a valve housing (11) between an inlet, to which the inflow from the internal combustion engine is connectable, and an outlet to which the outflow to the radiator of the internal combustion engine is connectable, which governs at least one valve opening formed between the inlet and the outlet and controls the coolant throughflow through this valve opening and the valve closure member of which is formed from a valve plate (23) rotationally adjustable within the plane of the valve opening and pressed against a support plate (21), which valve plate contains on its surface at least one passage (28), with which there is associated a corresponding controllable passage (25) in the support plate (21), and which is arranged on the axial inflow side of the support plate 21 which faces towards the inlet and away from the outlet, and having a second valve arrangement arranged coaxially with the plate-type slide valve (20), which arrangement is arranged in the valve housing (11) between the inlet and a by-pass outlet, to which a by-pass conduit leading back to the internal combustion engine is connectable, characterised in that the second valve arrangement is likewise formed as plate-type slide valve (40), which is arranged coaxially with the first plate-type slide valve (20) and is similar in construction to the latter, and like the latter comprises a valve plate (43), rotationally displaceable within the plane of the valve opening and pressed against an associated support plate (41), which valve plate contains on its surface at least one passage (48), with which there is associated a corresponding controllable passage (45) in the support plate (41), in that both valve plates (23, 43) are coupled rotationally displaceably with a common displacement shaft (24) and are arranged offset in relation to one another in the rotational displacement direction in such a way that in a first position of the displacement shaft (24) with both valve plates (23, 43) the second plate-type slide valve (40) controlling the passage to the by-pass is opened and the first plate-type slide valve (20) is closed and that in an open position of the displacement shaft (24) turned in relation thereto in the rotational displacement direction the first plate-type slide valve (20) controlling the passage to the outlet is opened and the second plate-type slide valve (40) is closed, and that a setting drive (34) for rotational displacement acts upon the displacement shaft (24).

2. Thermostatic valve according to Claim 1, characterised in that the passage (28, 48, 25, 45) in each valve plate (23, 43) and/or each support plate (21, 41) is formed from a hole, especially a bore, and/or an arcuate slot (29, 49 or 27, 47) concentric with the rotational displacement axis (26).

3. Thermostatic valve according to Claim 1 or 2, characterised in that the valve plate (43) of the second plate-type slide valve (40) is arranged on the axial inflow side of the associated support plate (41), which faces the valve plate (23) of the first plate-type slide valve (20).

4. Thermostatic valve according to one of Claims 1 - 3, characterised in that the support plates (21, 41) of the two plate-type slide valves (20, 40) and/or the valve plates (23, 43) of the two are in each case of like construction.

5. Thermostatic valve according to one of Claims 1 - 4, characterised in that between the two valve plates (23, 43) there is arranged a compression spring (30), especially an axial compression spring, for example a cylindrical helical spring, held on the displacement shaft (24), which presses the two valve plates (23, 43) away from one another and against the support plate (21 and 41) allocated to them respectively.

6. Thermostatic valve according to one of Claims 1 - 5, characterised in that each valve plate (23, 43) contains a polygonal bore (31, 51), for example a quadrilateral bore, which is penetrated by a correspondingly formed stepped piece (32, 52) of the displacement shaft (24), for example a quadrilateral stepped portion, leaving an axial movement play.

7. Thermostatic valve according to one of Claims 1 - 6, characterised in that each support plate (21, 41) comprises on one axial side a depression (33, 53) of approximately circular dish form, which corresponds to the disc diameter of the associated valve plate (23, 43), and in that the associated valve plate (23, 43) is received and guided in centred manner in the depression (33, 53).

8. Thermostatic valve according to one of Claims 1 - 7, characterised in that in the case of the first plate-type slide valve (20) and/or the second plate-type slide valve (40) its valve plate (23, 43) and/or support plate (21, 41) is formed from a ceramic disc.

9. Thermostatic valve according to one of Claims 1 - 8, characterised in that the setting drive (24) is formed as an electric stepping motor.

10. Thermostatic valve according to one of Claims 1 - 9, characterised in that the displacement shaft (24) is conducted out of the valve housing (11) and the setting drive (34) acts directly on it, which drive (34) is aligned coaxially with the setting shaft (24) and is applied and fastened to the valve housing (11).

11. Thermostatic valve according to one of Claims 1 - 10. characterised in that upon the setting shaft (24) there acts an opening spring (35) which is secured for the one part to the setting shaft (24) and for the other to the housing of the setting drive (34) or to the valve housing (11) and against which the setting drive (34) works, in the rotational displacement of the valve plate (23, 43) of the plate-type slide valve (20, 40) in the one rotational displacement direction, while the opening spring (35), on failure of the setting drive (34), automatically moves this valve plate (23) into the open position clearing the passage to the outlet pipe (13).

12. Thermostatic valve according to Claim 11, characterised in that the opening spring (35) is formed as a spiral spring approximately coaxial with the displacement shaft (24).

EP 0 246 359 B1

# FIG.1

# FIG.2

# FIG.3

2